# EUROPEAN PATENT SPECIFICATION

(11) **EP 0 509 781 B1**
(45) Date of publication and mention of the grant of the patent: **04.06.1997**
(21) Application number: 92303377.3
(22) Date of filing: 15.04.1992
(51) Int. Cl.: H04Q 7/14, H04Q 7/18, G08B 5/22

(54) **Method of rewriting message receive control information stored in radio pager**
Verfahren zum Überschreiben von Informationen zur Empfangssteuerung welche in einem Funkrufempfänger gespeichert sind
Méthode pour réécrire les informations de contrôle de réception enregistrées dans un récepteur d'appel

(30) Priority: 15.04.1991 JP 110983/91
(43) Date of publication of application: 21.10.1992
(73) Proprietor: NEC CORPORATION, Tokyo (JP)
(72) Inventor: Kondo, Hisashi, Minato-ku, Tokyo (JP)
(74) Representative: Orchard, Oliver John

(56) References cited:
- GB-A- 2 154 347
- US-A- 4 639 726
- US-A- 5 025 252

## Description

The present invention relates to improvements in a radio pager, and more specifically to a technique which enables the pager to be selectively set so that a message, which is directed to a given pager ID code, can be prevented from being displayed and/or normally processed. Still more specifically, the present invention finds an extensive use in restoring a radio pager to a normal use in the event that the pager assumes a condition wherein all the pager ID codes assigned thereto are rendered inoperative.

Radio pagers which are equipped with a display function have proven very popular in that a large amount of data can be acquired at one calling as compared with an older style type pager which alerts a person to call a single predetermined phone number merely by means of sound and/or flashing light.

It has been proposed to provide the above mentioned display function equipped pager with a plurality of pager ID (Identification) codes for expanding the usage of a radio pager.

In addition it has been proposed to reduce the size and weight of a radio pager for the convenience of portability thereof. However, this tendency tends to induce the problem that a pager is liable to be lost and/or fall into the hands of a person different from the actual subscriber. In such a case, it has been proposed that for a pager service company should render the pager inoperative. It is of course also desirable for a service company to be able to partially or totally disable a pager in the event that a subscriber does not return a rental pager and/or fails to pay the required service fees.

U.S. Patent No. 4,639,726 which was issued on January 27, 1987 and assigned to the same entity as the instant application, discloses a technique which enables a pager service company to issue a predetermined signal which prevents one or more of the pager ID codes from being compared with the pager address code contained in subsequent transmissions, and thus renders the arrangement either partially or totally inoperative.

That is to say, with the above mentioned technique, a predetermined signal which follows a pager address signal is used to inhibit or disables the receiving operation of a given pager and subsequently causes the display to be driven to exhibit thereon "particular messages" transmitted with the predetermined signal. These messages may take the form of "lost", "theft" and/or a predetermined telephone number, by way of example.

More specifically, this prior art is designed to inhibit the comparison of a given pager ID code with the incoming pager address code by a pager service company. Accordingly, the pager refuses the reception of the message directed to the pager ID code or codes which have been inhibited. Thus, as long as a single pager ID code is available for comparison with the pager address code, the other pagers ID codes can be restored to a condition wherein the services rendered by the service company are again receivable. That is, the service company is able to return the pager ID codes, which have been rendered inoperative, to the original status using the single ID code still in use.

However, in the event that the pager assumes a condition wherein all the pager ID codes are rendered inoperative, the pager per se must be returned to the pager service company for PROM (Programmable Read Only Memory) rewriting. This is awkward and a waste of time for both the subscriber and the service company.

A feature of a method illustrative of the present invention and described below, by way of example, is that it is able to return a radio pager to a normal use in the event that the pager assumes a condition wherein all the pager ID codes assigned thereto have been rendered inoperative.

In a particular arrangement to be described below, by way of example, a method of enabling/disabling message receipt in a radio pager, includes the steps of: (a) receiving a radio transmission which includes a pager address code and a message signal which follows said pager address code; (b) comparing the pager address code with a predetermined pager ID code; (c) acquiring the message signal in the event that the pager address code coincides with the pager ID code; (d) checking if control information is present within said message signal; (e) extracting said control information from said message signal in the event of a positive outcome in step (d); and (f) rewriting a piece of message receive control data which determines if the message signal is to be displayed or disregarded, in the event that the control code is found in the message signal.

There will also be described below, by way of example, a method of rewriting message receive control information which has been stored in a radio pager, each piece of said message receive control information being assigned to one of plural pager ID codes previously allocated to said radio pager and indicating if a message directed to the corresponding pager ID code is acceptable, said method comprising the steps of: (a) receiving, at said radio pager, a pager address code which is followed by a message signal; (b) comparing the pager address code with each of said pager ID codes; (c) acquiring the message signal in the event that the pager address code coincides with one of said pager ID codes; (d) checking if control codes are present within said message signal, said control codes including message receive control data by which said one of pieces of message receive control information is rewritten; and (e) rewriting one of pieces of the message information by the message receive control data transmitted in the event that the control codes are found to be present within said message signal in step (d).

The following description and drawings disclose, by means of an example, the invention which is characterised in the appended claims, whose terms determine the extent of the protection conferred hereby.

In the drawings:-
Fig. 1 is a block schematic diagram of a pager for use in illustrating the present invention,
Fig. 2 is a chart depicting the formats of signals which are applied to the radio pager,
Fig. 3 is a chart which depicts the function codes and characters, which are defined by ISO 646, and which are used in carrying out one embodiment of the present invention,
Fig. 4 depicts a memory map which indicates the allocation of contents stored in a non-volatile memory of the pager illustrated in Fig. 1,
Fig. 5 is a flow chart which characterizes the operations of one embodiment of the present invention;
Fig. 6 is a sketch for use in describing one embodiment of the present invention, and
Fig. 7 is a flow chart which depicts the operations which occur during normal pager usage of the one embodiment in accordance with the present invention.

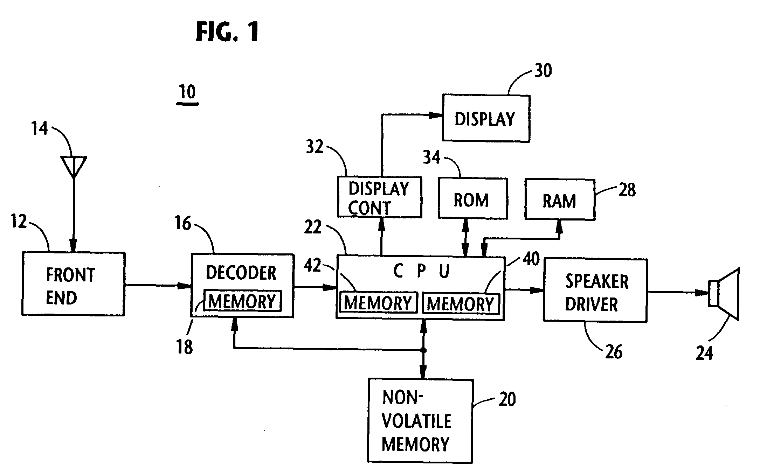

Referring to Fig. 1 there is shown a radio pager 10 having a front end (viz., radio section) 12 for amplifying and demodulating a code-modulated carrier wave received by an antenna 14. The front end 12 is conventional in construction and the arrangement includes a high frequency amplifier, a frequency converter, an IF amplifier and a discriminator (not illustrated in Fig. 1). The output of the front end 12 is applied to a decoder 16 which is arranged to compare an incoming pager address code with each of plural pager ID (Identification) codes stored in a memory 18. The pager ID codes in the memory 18 are written thereinto from a non-volatile memory 20 when the pager 10 is switched on. In the event that the incoming pager address code coincides with one of the pager ID codes, the decoder 16 applies a message signal, which follows the coincident pager address code, to a CPU (Central Processing Unit)) or message receipt controller 22. It is known in the art that the message signal is applied to the CPU 22 after being subject to error correction in decoder 16.

In the event that the CPU 22 detects that the message signal applied thereto is directed to a pager ID code through which the receipt of a message is permitted, the CPU 22 energizes a speaker 24 by way of a speaker driver 26. Although not shown in Fig. 1, a light source such as an LED (Light Emitting Diode) or the like, may be installed to provide a visible signal in addition to the audible one produced by the speaker 24. Further, the CPU 22 stores the message in a RAM (Random Access Memory) 28 and simultaneously induces the same to appear on a display 30 using a display controller 32 in a manner known in the art.

The CPU 22 is arranged to control the overall operations of the pager 10 using a program which is previously stored in a ROM 34.

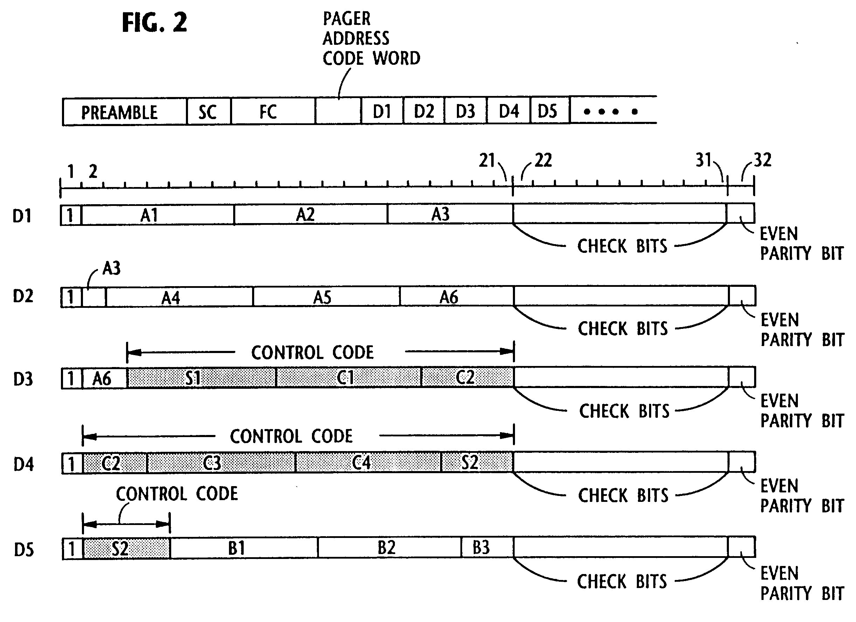

Fig. 2 shows, by way of example, a code format which may be used with the present invention. Such a code format has been proposed by the POCSAG (British Post Office Code Standardization Advisory Group). It should be noted however, that the present invention is not limited to the code format shown in Fig. 2. As shown at the uppermost row of Fig. 2, a transmission consists of a preamble, a synchronization code (SC), a frame synchronization code (FC), a pager address codeword, and a plurality of message (viz., data) codewords denoted by D1, D2, D3, D4, D5 .... in this order.

Each of message codewords D1-D5 consists of 32 bits wherein the first bit indicates whether the corresponding codeword is an address codeword or a message codeword and wherein the last eleven bits are check bits and an even parity bit. In this particular embodiment, a logic "1" denotes the message codeword while a logic "0" denotes a pager address codeword (although not shown).

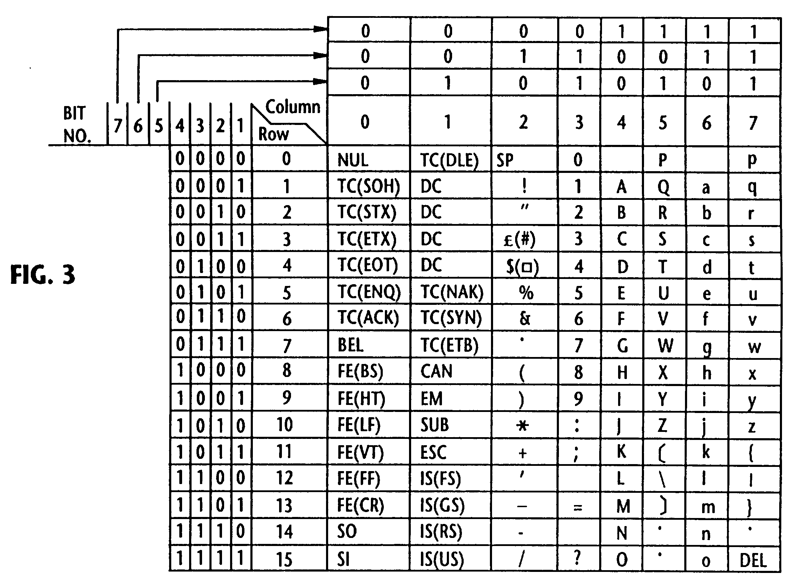

Each of message units such as A1-A6 and B1-B3 is comprised of 7 bits and represents one of the characters which are defined by ISO (International Standards Organization) 646 as shown in Fig. 3.

More specifically, the first 4 bits are used to indicate row while the remaining 3 bits define column. Further, each of the message units A1-A6 and B1-B3 indicates one of the characters positioned in the third to eighth columns of the table of ISO 646.

The six message units S1, C1-C4 and S2 are utilized as control codes which have been inserted into a message signal by a pager service company. In order to clearly distinguish the control codes from the other message codes, it is preferable to use some of the function codes positioned in the first and second columns of the table shown in Fig. 3. The control code S1 indicates the initiation of the set of the control codes, while C1 indicates that the next code C2 is a sign bit which indicates permission or prohibition of message reception. On the other hand, the control codes C3, C4 specify the pager ID code, while the last S2 the end of the control code set.

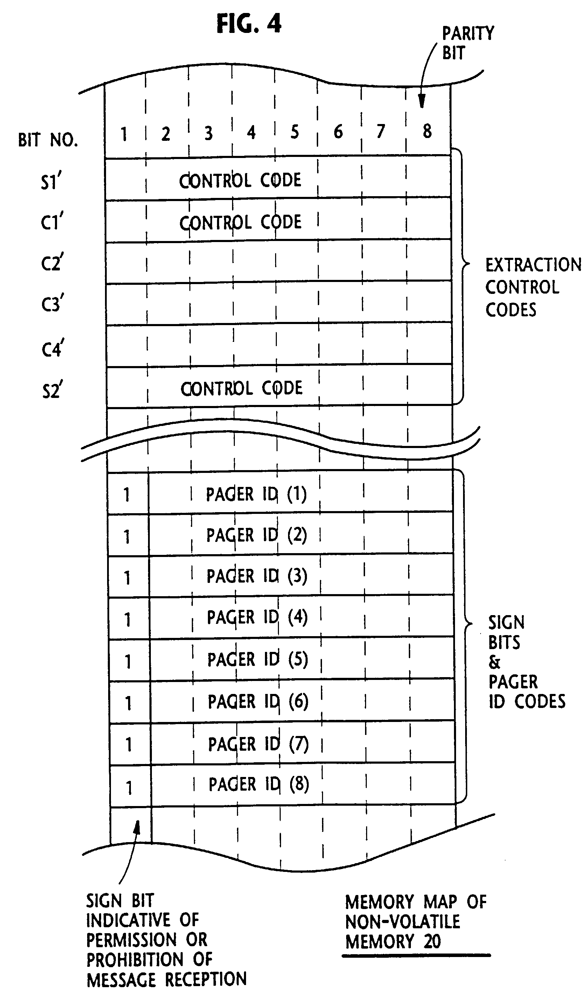

Fig. 4 shows a memory map wherein extraction control codes S1', C1'-C4' and S2' are arranged in the illustrated manner along with 8 pager ID codes. It should be noted that the number of pager ID codes in Fig. 4 is merely exemplary. Each of the 8 pager ID codes are preceded by a sign bit. In this instance each of the sign bits is set to prohibit messages from being displayed. In the event that the sign bit is changed to a different value (e.g. changed from "1" to "0"), the messages which is directed to the pager ID having a sign bit "0", will be displayed as in a normal or original mode. It should be noted that the position of each of sign bits is not limited to the illustrated one. It may be stored in other memory positions if the relationship with the corresponding pager ID code can be maintained.

According to the present invention, the above mentioned sign bits can be selectively rewritten to permit message reception even after all of the bits have been set in the manner illustrated in Fig. 4 (viz., all have been set to inhibit message reception).

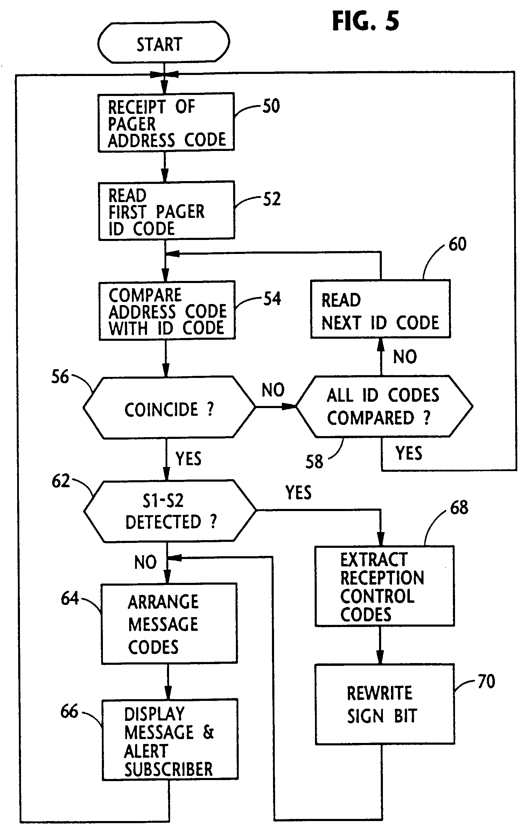

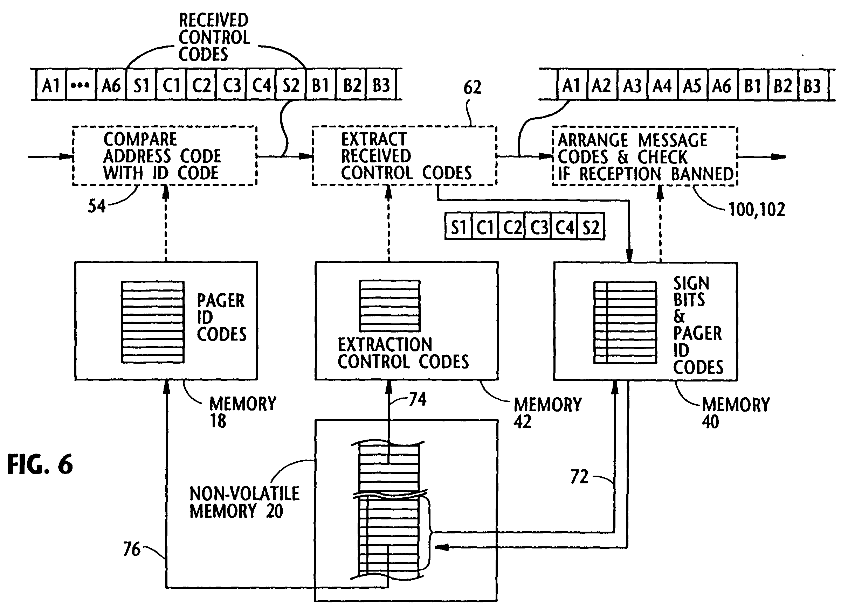

The present invention will further be discussed with reference to Figs. 5 and 6.

Fig. 5 shows a flow chart which depicts the steps which characterize the present invention and which shows the manner in which the received control codes are extracted and then the sign bit(s) is re-written.

As shown in Fig. 6, when the pager is switched on, the pager ID codes and the sign bits in the non-volatile memory 20 are loaded into a memory 40 of the CPU 22 (Fig. 1) via a line 72, while the extraction control codes in the memory 40 are loaded into a memory 42 (also included in the CPU 22) via a line 74. As mentioned above, when the pager is switched on, the pager ID codes in the non-volatile memory 20 are written, via a line 76, into the memory 18 in the decoder 16 in order to compare the incoming pager address code with one of the pager ID codes.

In Fig. 6, the operation identical with an operation defined by step in Fig. 5 is denoted by the same numeral.

The first step 50 of this routine is such as to receive an address code by the pager 10. Following this the first ID code is read out of the memory 18 (step 52) and compared with the received address code (step 54) in decoder 16 (Fig. 1). In step 56 it is determined if the comparison results in a match or not. In the event that the two codes do not coincide, the routine goes to step 58 wherein it is determined if all of the ID codes which are currently loaded into memory 18 have been compared or not. In the event of a negative outcome, the routine goes to step 60 wherein the next ID code is read.

In the event that none of the ID codes matches the received address code, the routine loops back to step 50 to await the next address code reception.

However, in the event that a match is made then the routine proceeds from step 56 to step 62. In this step 62, it is checked to see if the received control code S1 is detected. If the answer is negative, the message codes such as A1, A2, ... A6 are sequentially arranged in step 64. That is to say, the message codes are converted into the corresponding characters using the table shown in Fig. 3 (step 63) and then displayed at step 66.

In the event of a positive outcome in step 62, viz., the received S1 control code is detected, the routine goes to step 68 wherein the received control codes S1, C1, C2, C3, C4 and S2 are extracted by detecting the last control code S2. Thereafter, the control codes C2, C3 and C4 are written into the corresponding memory position of the memory 40 (see Fig. 6). Following this, the sign bit denoted by the received control code C2 is written into the bit position according to the corresponding pager ID specified by the control codes C3, C4 (step 70).

After the sign bit is rewritten, the routine goes to step 64 wherein the message codes B1, B2, ... are converted into the corresponding characters and then displayed at step 66.

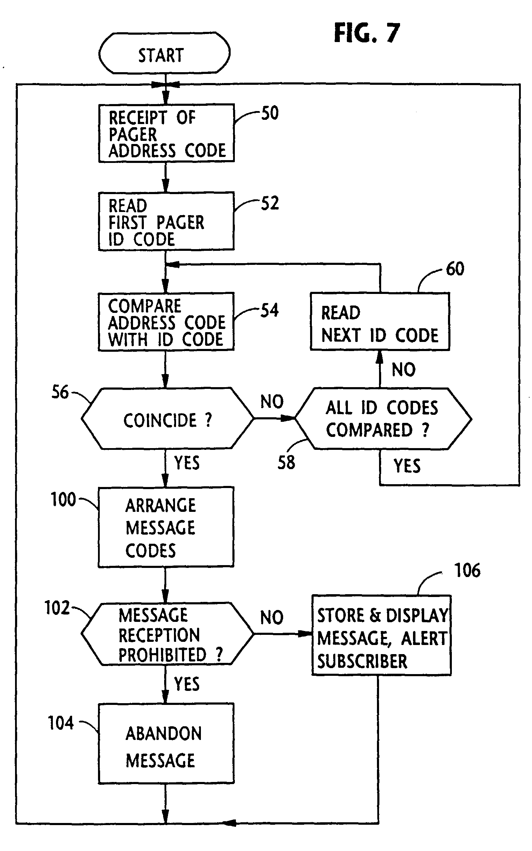

Fig. 7 shows a flow chart which depicts the steps which characterize the pager's operations in a normal mode wherein the message signal contains no control codes. Steps 50, 52, 54, 56, 58 and 60 of Fig. 7 are respectively identical with the Fig. 5 steps labelled with the same numerals and, accordingly the descriptions thereof will be omitted for the sake of brevity.

In Fig. 7, in the case of a positive outcome at step 56, the routine goes on to step 100 wherein the message codes are successively arranged as above mentioned. Following this, at step 102, it is determined if the sign bit assigned to the coincident pager ID code has been set to inhibit message reception or not by referring to the content of the memory 40 (see Fig. 6). In the case that the sign bit in question is set to "0" and message receipt is permissible, the routine proceeds to step 106 wherein normal display is implemented and alert signals are issued.

However, if it is determined that the sign bit which corresponds to the coincident ID code has been set to "1" then the routine goes to step 104 wherein the message is abandoned or disregarded and thus it is not exhibited on the display 30 without issuance of any audible signal from the speaker 24.

In the above discussion, the two control codes S1, C1 are followed by C2. However, one of S1 and C1 may be deleted if the control code extraction is assured. Further, the pager ID code is specified by two control codes C3, C4 for indicating a number of ID codes in a manner of so called multi-branching. However, it is within the scope of the present invention to delete one of C3, C4 if such a multi-branching ID code definition is not employed.

It will be understood that the above disclosure is representative of only one possible embodiment of the present invention and that the concept on which the invention is based is not specifically limited thereto. but that variations and modifications thereof, as well as other embodiments, may be made within the scope of the appended claims.

## Claims

1. A method of rewriting message receive control information (S1',C1'-C4',S2) which has been stored in a radio pager (10), a plurality of pieces (C3', C4') of the message receive control information being respectively assigned to a plurality of pager ID codes previously allocated to the radio pager and indicating (0) if a message directed to the corresponding pager ID code is acceptable, the method including
(a) receiving, at the radio pager, a pager address code which is followed by message information (D1-D5), and being characterized by the steps of:
(b) comparing (54) the pager address code with each of the pager ID codes even if all of the pager ID codes are inoperative;
(c) entering into a message transmission waiting state (50) if the pager address code does not coincide with any of the pager ID codes;
(d) checking (62) to determine if control codes are present within the message information if the pager address code coincides with one of the pager ID codes (56); and
(e) rewriting (70) one piece of the plurality of pieces of the message receive control information by using (68) the control codes.

2. A method as claimed in claim 1, further comprising the step whereby when the control codes (S1,C1-C4,S2) are detected (68) in the message information (D1-D5) in step (d), a subscriber of the radio pager (10) is informed (66) of the content (B1-B3) of the message information.

3. A method as claimed in claim 1, further comprising the step whereby when the radio pager is powered on, the pager ID codes are read out from a non-volatile memory (20) into storage means (18) provided in a decoder (16) at which the comparison in step (b) is implemented.

4. A method as claimed in claim 1, further comprising the step whereby when the radio pager is switched on, control code detecting codes (S1',C1'-C4',S2') are read out from a non-volatile memory (20) into a controller (22) and used to search for the detection (62) of the control codes (S1,C1-C4,S2) included in the message information (D1-D5).

## Patentansprüche

1. Verfahren zum Überschreiben von Steuerinformation für den Nachrichtenempfang (S1',C1'-C4',S2), die in einem Funkrufempfänger (10) gespeichert worden, wobei mehrere Stücke (C3', C4') der Steuerinformation für den Nachrichtenempfang jeweils mehreren vorher dem Funkrufempfänger zugeteilten Funkrufempfänger-ID-Codes zugewiesen werden und anzeigen (0), ob eine Nachricht, die an den entsprechenden Funkrufempfänger-ID-Code gerichtet wird, annehmbar ist, wobei das Verfahren aufweist:
(a) Empfangen eines Funkrufempfänger-Adreßcodes in einem Funkrufempfänger, der von einer Nachrichteninformation (D1-D5) gefolgt wird, und wobei es durch die Schritte gekennzeichnet ist:
(b) Vergleichen (54) des Funkrufempfänger-Adreßcodes mit jedem der Funkrufempfänger-ID-Codes, selbst wenn alle der Funkrufempfänger-ID-Codes unbrauchbar sind;
(c) Eintreten in einen Wartezustand zur Nachrichtenübertragung (50), wenn der Funkrufempfänger-Adreßcode mit keinem der Funkrufempfänger-ID-Codes übereinstimmt;
(d) Prüfen (62), um festzustellen, ob Steuercodes innerhalb der Nachrichteninformation vorhanden sind, wenn der Funkrufempfänger-Adreßcode mit einem der Funkrufempfänger-ID-Codes (56) übereinstimmt; und
(e) Überschreiben (70) eines Stücks der mehreren Stücke der Steuerinformation für den Nachrichtenempfang durch Verwenden (68) der Steuercodes.

2. Verfahren nach Anspruch 1, das ferner den Schritt aufweist, durch den, wenn die Steuercodes (S1,C1-C4,S2) (68) in der Nachrichteninformation (D1-D5) im Schritt (d) ermittelt werden, ein Teilnehmer des Funkrufempfängers (10) vom Inhalt (B1-B3) der Nachrichteninformation informiert (66) wird.

3. Verfahren nach Anspruch 1, das ferner den Schritt aufweist, durch den, wenn der Funkrufempfänger eingeschaltet wird, die Funkrufempfänger-ID-Codes aus einem nichtflüchtigen Speicher (20) in Speichereinrichtungen (18) ausgelesen werden, die in einem Decoder (16) bereitgestellt werden, in dem der Vergleich im Schritt (b) durchgeführt wird.

4. Verfahren nach Anspruch 1, das ferner den Schritt aufweist, durch den, wenn der Funkrufempfänger eingeschaltet wird, Steuercode-Ermittlungscodes (S1',C1'-C4',S2') von einem nichtflüchtigen Speicher (20) in eine Steuereinrichtung (22) ausgelesen werden und verwendet werden, um nach der Ermittlung (62) der Steuercodes (S1,C1-C4,S2) zu suchen, die in der Nachrichteninformation (D1-D5) enthalten sind.

## Revendications

1. Méthode pour réécrire des informations de contrôle de réception de message (S1',C1'-C4',S2') qui ont été enregistrées dans un récepteur d'appel radio (10), une pluralité d'éléments (C3',C4') des informations de contrôle de réception de message étant respectivement affectés à une pluralité de codes d'identification (ID) du récepteur d'appel alloués précédemment au récepteur d'appel radio et indiquant (0) si un message s'adressant au code d'identification correspondant du récepteur d'appel est acceptable, la méthode consistant à :
(a) recevoir, dans le récepteur d'appel radio, un code d'adresse du récepteur d'appel qui est suivi d'informations de message (D1-D5),
et étant caractérisée par les étapes consistant à :
(b) comparer (54) le code d'adresse du récepteur d'appel à chacun des codes d'identification du récepteur d'appel même si tous les codes d'identification du récepteur d'appel sont inopérants;
(c) entrer dans un état d'attente de transmission de message (50) si le code d'adresse du récepteur d'appel ne coïncide avec aucun des codes d'identification du récepteur d'appel;
(d) effectuer une vérification (62) pour déterminer si des codes de contrôle sont présents dans les informations de message, si le code d'adresse du récepteur d'appel coïncide avec un des codes d'identification du récepteur d'appel (56); et
(e) réécrire (70) un élément de la pluralité d'éléments des informations de contrôle de réception de message en utilisant (68) les codes de contrôle.

2. Méthode selon la revendication 1, comprenant en outre l'étape par laquelle, lorsque les codes de contrôle (S1,C1-C4,S2) sont détectés (68) dans les informations de message (D1-D5) dans l'étape (d), un abonné du récepteur d'appel radio (10) est informé (66) du contenu (B1-B3) des informations de message.

3. Méthode selon la revendication 1, comprenant en outre l'étape par laquelle, lorsque le récepteur d'appel radio est mis sous tension, les codes d'identification du récepteur d'appel sont lus depuis une mémoire rémanente (20) dans des moyens d'enregistrement (18) fournis dans un décodeur (16) où la comparaison dans l'étape (b) est réalisée.

4. Méthode selon la revendication 1, comprenant en outre l'étape par laquelle, lorsque le récepteur d'appel radio est sous tension, les codes de détection des codes de contrôle (S1',C1'-C4',S2') sont lus depuis une mémoire rémanente (20) dans une unité de commande (22) et sont utilisés pour la recherche de la détection (62) des codes de contrôle (S1,C1-C4,S2) compris dans les informations de message (D1-D5).
